# FASCICULE DE BREVET EUROPEEN

(11) **EP 2 535 733 B1**
(45) Date de publication et mention de la délivrance du brevet: **03.04.2019**
(21) Numéro de dépôt: 12171350.7
(22) Date de dépôt: 08.06.2012
(51) Int. Cl.: G01S 13/86, G01S 13/88, G01S 7/40

(54) **Système compact de mesure altimétrique de haute précision**
Kompaktsystem zur Hochdruck-Höhenmessung
High-precision, compact altimetric measurement system

(30) Priorité: 17.06.2011 FR 1101859
(43) Date de publication de la demande: 19.12.2012
(73) Titulaire: Thales, 92400 Courbevoie (FR)
(72) Inventeur: Richard, Jacques, 31200 TOULOUSE (FR); Taveneau, Nicolas, 31100 TOULOUSE (FR)
(74) Mandataire: Labatte, Laurent

(56) Documents cités:
- WO-A1-2010/052530
- WO-A2-98/27414
- US-A- 5 175 555
- US-A1- 2004 145 514

## Description

La présente invention concerne un système compact de mesure altimétrique de haute précision. Elle permet de réduire la complexité, le volume et la masse du système de mesure tout en maintenant un très haut niveau de précision. L'invention s'applique notamment à l'altimétrie spatiale, en vue de faciliter l'emport de la charge utile altimétrique sur des satellites dédiés (satellites altimétriques spécifiques) ou des satellites d'opportunité, comme des satellites à mission principale de télécommunications en orbite basse sur lesquels on peut embarquer une charge utile secondaire.

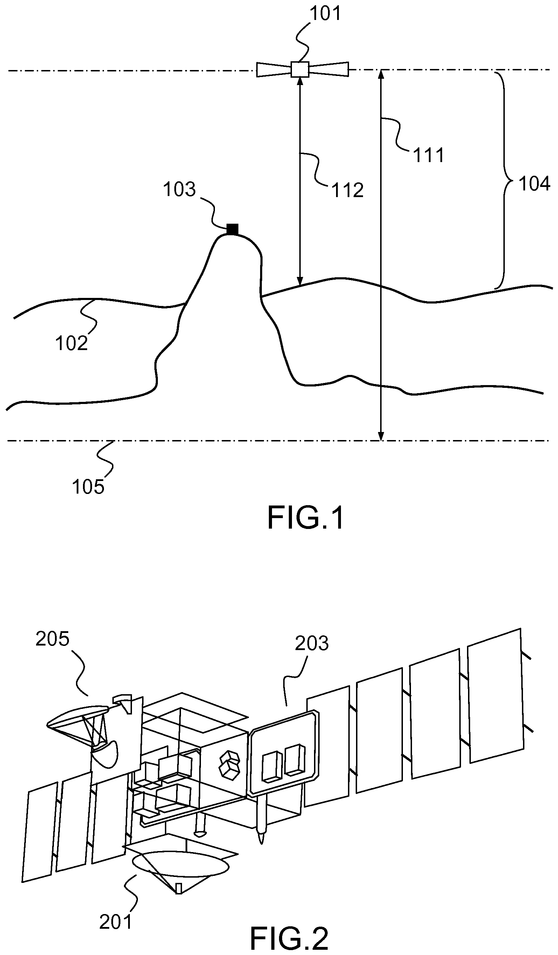

Un objectif de l'altimétrie spatiale est la mesure de la topographie de la surface terrestre, c'est-à-dire les océans, glaces, et terres émergées. Son principe est illustré en figure 1. Un satellite 101 détermine d'une part son altitude précise 111 par rapport à une surface de référence terrestre 105 (ellipsoïde ou géoïde terrestre), grâce à un système de positionnement précis (système GPS, DORIS, GLONASS ou Galiléo), et d'autre part, la distance altimétrique 112 en mesurant le temps mis par un signal pour parcourir un trajet aller-retour à travers l'atmosphère 104 entre celui-ci 101 et la surface terrestre 102 (qui peut être le niveau de la mer). Connaissant ces deux informations 111, 112, le système déduit la hauteur de la surface terrestre par rapport à la surface de référence 105.

Un tel satellite 101 est équipé d'une charge utile dédiée aux mesures d'altimétrie, comme illustré en figure 2. Cette charge utile comprend notamment les instruments suivants :
▪ un radar altimètre 201 qui mesure l'altitude entre la surface terrestre et le satellite 101 ;
▪ un système de positionnement très précis du satellite 203 (parfois désigné par l'acronyme anglais « POD » comme « Precise Orbit Détermination ») en relation avec des stations de référence au sol (système DORIS) ou des satellites de référence en orbite (systèmes GPS, GLONASS ou Galiléo) afin de pouvoir référencer la topographie de la surface terrestre dans un référentiel terrestre ;
▪ un radiomètre 205 pour corriger les incertitudes de propagation dues à la tenue en vapeur d'eau de la troposphère.
Pour les charges utiles à très hautes performances, par exemple pour la mesure de la topographie des océans, l'altimètre opère sur deux fréquences, Ku et C typiquement, pour permettre une correction performante de l'effet de l'ionosphère, soit sur une seule mais très haute fréquence, généralement en bande Ka, pour réduire l'effet de l'ionosphère à un niveau négligeable, le résidu d'erreur étant corrigé en utilisant des modèles de l'ionosphère dont la précision est alors suffisante.

Les instruments susmentionnés précédemment sont généralement proposés sous la forme d'instruments indépendants les uns des autres, chacun comportant notamment sa propre antenne, ses propres modules de traitement analogique, ses propres modules de traitement numérique, ses propres convertisseurs d'alimentation. Les instruments constituent ainsi une charge utile encombrante et lourde.

Des techniques ont été mises en oeuvre pour partager l'antenne entre l'altimètre et le radiomètre. Toutefois, ce simple partage s'avère insuffisant pour réduire de manière significative le volume et la masse de la charge utile nécessaire à la mission d'altimétrie.

On connaît du document US 5 175 555 une structure d'antenne commune à un radiomètre et à un altimètre, en utilisant un cornet guide d'ondes à alimentation multiples. On connaît également du document WO 2010/052530 un système radar-radiomètre combiné à polarisation multiple pour la télédétection de la surface et de l'atmosphère de la terre, comprenant une antenne et des modules d'émetteur pour former des impulsions de sondage à au moins deux fréquences différentes. On connaît enfin du document WO 98/27414 un procédé de calibration d'un radiomètre avec des températures de référence issues d'une source de bruit ajustable (sous forme de transistor) fournissant une source chaude depuis un port de sortie et une source froide depuis un port d'entrée.

Un but de l'invention est de réduire le volume et la masse d'une charge utile apte à effectuer des mesures précises de topographie de la surface terrestre. A cet effet, l'invention a pour objet un système d'altimétrie apte à être embarqué sur un satellite, le système comprenant un altimètre émettant et recevant des signaux sur au moins une première bande de fréquence et un radiomètre recevant des signaux sur au moins une deuxième bande de fréquence, ledit altimètre et ledit radiomètre étant connectés à une même antenne, le système étant caractérisé en ce qu'il comporte des moyens de réception communs à l'altimètre et au radiomètre, lesdits moyens étant aptes à amplifier et à filtrer les signaux reçus de l'antenne sur une bande de fréquence comprenant au moins la première et la deuxième bande de fréquence et des moyens de séparation des signaux de la première bande de fréquence des signaux présents sur la deuxième bande de fréquence, les signaux sur la première bande de fréquence étant exploités pour estimer la distance altimétrique du satellite, et les mesures radiométriques étant exploitées pour corriger ladite estimation de l'incertitude de propagation troposphérique.

L'altimètre peut émettre sur plusieurs bandes de fréquences distinctes et le radiomètre peut également recevoir des signaux sur plusieurs bandes de fréquences distinctes, la mise en oeuvre du système d'altimétrie selon l'invention étant possible lorsqu'au moins une bande de fréquence d'émission de l'altimètre est suffisamment proche d'une bande de fréquence de réception du radiomètre pour que ces bandes proches puissent être traitées par des fonctions de réception communes.

Selon un mode de réalisation du système d'altimétrie selon l'invention, les moyens de réception comprennent un amplificateur faible bruit opérant sur une bande de fréquence comprenant ladite première bande de fréquence et ladite deuxième bande de fréquence.

Selon un mode de réalisation du système d'altimétrie selon l'invention, les moyens de réception comprennent un filtre passe-bande apte à sélectionner une bande de fréquence comprenant ladite première bande de fréquence et ladite deuxième bande de fréquence.

Selon un mode de réalisation du système d'altimétrie selon l'invention, ledit altimètre et ledit radiomètre sont connectés à l'antenne via des moyens d'interconnexion comportant une fonction d'isolation des voies émission et réception, ces moyens d'interconnexion comprenant un premier circulateur ou groupe de circulateurs en série connecté sur un premier accès à l'antenne, un deuxième accès dudit circulateur ou groupe de circulateurs étant connecté sur un interrupteur relié à la voie émission de l'altimètre, un troisième accès dudit circulateur ou groupe de circulateurs étant connecté sur un interrupteur relié aux moyens de réception communs à l'altimètre et au radiomètre.

Selon un mode de réalisation du système d'altimétrie selon l'invention, les moyens de séparation des signaux comprennent un filtre de réjection de la première bande de fréquence, ledit filtre étant placé en aval des moyens de réception communs.

Selon un mode de réalisation du système d'altimétrie selon l'invention, ladite première bande de fréquence et ladite deuxième bande de fréquence sont comprises dans la bande Ka.

Selon un mode de réalisation du système d'altimétrie selon l'invention, les moyens de réception communs sont connectés à un premier circulateur relié via un premier accès aux moyens d'isolation, et relié via un deuxième accès à des moyens de calibration du radiomètre, lesdits moyens de calibration comprenant une source chaude et une source froide configurées pour être connectées alternativement au premier circulateur pendants les périodes de calibration dudit radiomètre.

Selon un mode de réalisation du système d'altimétrie selon l'invention, la deuxième bande de fréquence est choisie pour que sa borne minimale coïncide avec la borne maximale de la première bande de fréquence, ou pour que sa borne maximale coïncide avec la borne minimale de la première bande de fréquence.

L'invention a également pour objet une charge utile altimétrique pour satellite comprenant un dispositif de positionnement du satellite par rapport à un référentiel terrestre et un système d'altimétrie tel que décrit plus haut.

L'invention a également pour objet un procédé de mesure altimétrique à partir d'un satellite spatial, le procédé comportant une étape de correction radiométrique, le procédé comprenant une étape d'émission d'un signal vers la surface terrestre, le procédé étant caractérisé en ce qu'il comprend au moins les étapes suivantes :
▪ calibrer le radiomètre pendant l'attente de l'écho issu de la réflexion du sol du signal émis ;
▪ recevoir et traiter l'écho provenant du sol et réaliser concomitamment des mesures radiométriques parmi lesquelles au moins certaines sont effectuées sur une voie de réception commune à la voie de réception dudit écho.

D'autres caractéristiques apparaîtront à la lecture de la description détaillée donnée à titre d'exemple et non limitative qui suit faite en regard de dessins annexés qui représentent :
- la figure 1, une illustration du principe d'altimétrie spatiale, cette figure ayant déjà été présentée plus haut ;
- la figure 2, une représentation d'un satellite comportant une charge utile à l'architecture classique, cette figure ayant déjà été présentée plus haut ;
- la figure 3, un exemple d'architecture d'un système de mesure altimétrique de haute précision selon l'invention ;
- la figure 4, un schéma illustrant un premier exemple de bandes de fréquence utilisées par le système de mesure altimétrique selon l'invention ;
- la figure 5, un schéma illustrant un deuxième exemple de bandes de fréquence utilisées par le système de mesure altimétrique selon l'invention ;
- la figure 6, un schéma représentant un exemple de moyens d'isolation mis en oeuvre pour isoler la voie émission de la fonction altimétrique de la voie réception commune du système selon l'invention.

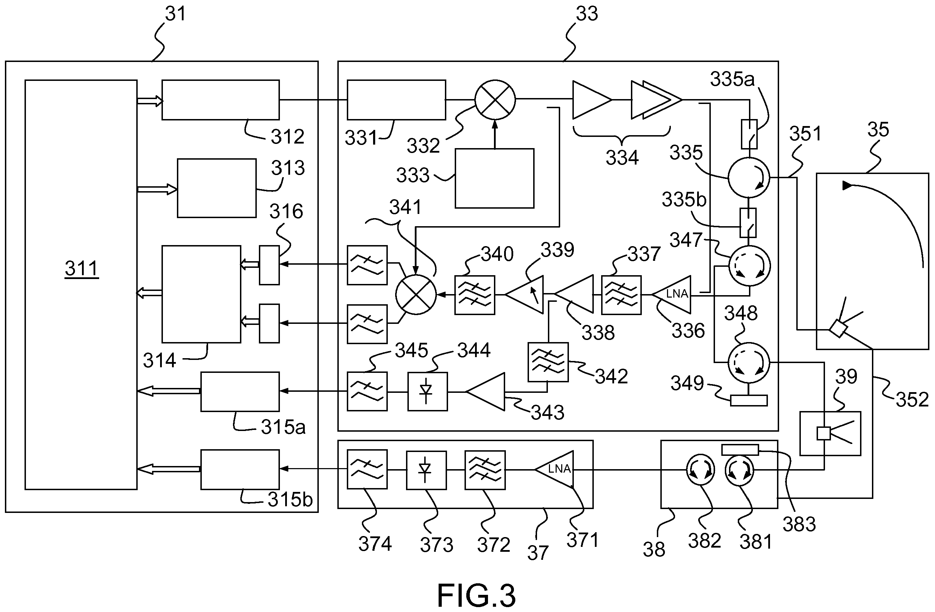

La figure 3 présente un exemple d'architecture d'un système de mesure altimétrique de haute précision selon l'invention. La figure est relative à un altimètre en bande Ka unique qui se prête particulièrement bien à l'application de l'invention en raison de la proximité de la bande altimétrique avec une des bandes radiométriques. Le système comprend une unité de traitement numérique 31, une unité de traitement analogique 33 en bande Ka, une antenne 35, une unité de traitement analogique 37 en bande K comprenant un module de calibration 38, et un cornet de ciel 39 utilisé comme source de référence froide pour les deux canaux du radiomètre.

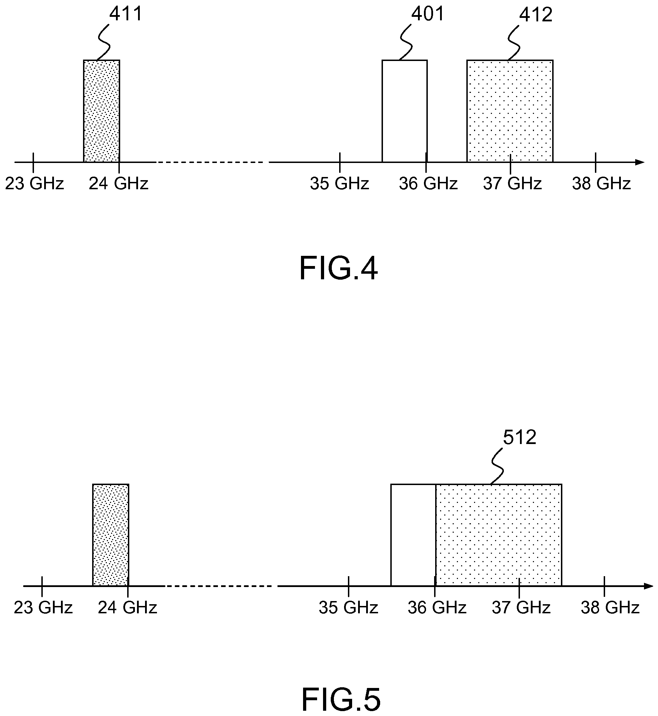

La figure 4, illustre via un schéma, un premier exemple de bandes de fréquence utilisées par le système de mesure altimétrique selon l'invention. Dans l'exemple, la fonction altimètre est conçue pour émettre et recevoir des signaux dans une seule bande de fréquence 401, comprise dans la bande Ka. Le radiomètre réalise des mesures de bruit sur deux bandes de fréquences adéquates pour la mesure de la teneur en eau intégrée sur la hauteur de la troposphère : une première bande 411 en bande K, usuellement autour de 24 GHz, et une deuxième bande de fréquence 412 en bande Ka, usuellement autour de 37 GHz.

La figure 3 est maintenant décrite. L'unité de traitement numérique 31 a notamment pour rôles de commander l'émission de signaux vers le sol pour la fonction altimétrique, d'acquérir convenablement les échos afin d'estimer la distance altimétrique à partir du temps de retard mesuré entre le signal émis et l'écho (cette estimation peut être réalisée soit à bord, soit au sol à partir des échos échantillonnés, numérisés, moyennés et retransmis au sol), et de recueillir les mesures radiométriques issues des unités de traitement analogique en bande K 37 et Ka 33 afin de corriger l'estimation de distance avec les mesures radiométriques (cette correction est réalisée dans une station de traitement sol). L'unité de traitement numérique 31 commande l'unité de traitement analogique 33 en bande Ka, laquelle n'est pas dédiée à une fonction seule (altimètre ou radiomètre), mais est apte à traiter les signaux analogiques en bande Ka de la fonction altimètre et de la fonction radiomètre. L'unité de traitement analogique 33 en bande Ka a notamment pour rôles de générer et de transmettre vers l'antenne 35 un signal d'émission de quelques Watts pour la fonction altimétrique, puis de traiter les signaux reçus par l'antenne 35 avant de les transmettre à l'unité de traitement numérique 31. L'unité de traitement 37 en bande K n'est utilisée que pour la fonction radiométrique. Elle a notamment pour rôle de traiter les signaux reçus sur la première bande du radiomètre, puis de transmettre ces signaux amplifiés et filtrés à l'unité de traitement numérique 31. Cette unité 37 comprend une fonction de calibration 38 du gain de la voie bande K à partir de bruits parfaitement connus délivrés par une source froide 39 et une source chaude 383. La calibration du gain du canal Ka radiomètre est effectuée selon le même principe que celui du canal K grâce aux circulateurs 347, 348, à la source chaude 349 et à la source froide 39 intégrés dans l'unité de traitement analogique 33.

L'unité de traitement numérique 31 comporte un module central de contrôle 311 permettant de déclencher et d'ordonnancer les tâches exécutées par l'unité de calcul numérique 31, ce module central de contrôle 311 étant connecté à un générateur 312 d'impulsions, à un module de séquencement 313 jouant un rôle de cadencement précis, à une unité de démodulation, de filtrage adapté et de mise en forme des échos 314 et à des convertisseurs analogique-numérique 315a, 315b.

Lorsque l'altimètre fonctionne en émission, le générateur 312 d'impulsions produit un « chirp », c'est-à-dire une impulsion modulée linéairement en fréquence, par exemple sur une bande d'environ 30 MHz. Ce chirp est transmis à un module 331 d'extension de la bande de fréquence, lequel, par exemple, élargit la bande d'un facteur 16 pour moduler le chirp sur une bande de fréquence de 500 MHz dans l'exemple décrit. Ensuite, des moyens de transposition de fréquence permettent de transposer cette impulsion modulée en bande Ka. Dans l'exemple, le chirp est transmis à un mélangeur 332 alimenté par un oscillateur local 333. Le signal en bande Ka, généralement de quelques milliwatts, est amplifié à un niveau de quelques watts par l'amplificateur 334 puis transmis vers l'antenne 35 via l'accès 351 pour être émis par l'antenne 35 vers la surface terrestre. Dans l'exemple, ce signal de sondage altimétrique est émis sur une bande de 500MHz comprise entre 35,5 GHz et 36 GHz.

L'antenne 35 est apte à fonctionner en réception et en émission. Elle comporte deux accès 351 et 352 pour traiter les deux bandes de fréquence K et Ka. Le premier accès 351 est connecté à l'unité de traitement analogique 33 et le deuxième accès 352 est connecté à l'unité de traitement analogique 37.

Lorsque l'altimètre fonctionne en réception, un signal reçu par l'antenne 35 est transmis via le premier accès 351 vers une chaîne de réception de l'unité de traitement analogique en bande Ka 33. Afin de partager le premier accès 351 de l'antenne 35 pour la réception et l'émission, des moyens de commutation comprenant un circulateur 335 associé à deux interrupteurs d'isolation 335a, 335b fonctionnant en alternance sont mis en oeuvre. Les interrupteurs d'isolation 335a, 335b permettent d'améliorer le bloquage des signaux vers la voie qui n'est pas activée (alternativement émission et réception).

Le signal reçu par l'antenne 35 en mode réception est donc transmis via le circulateur 335 et l'interrupteur d'isolation 335b (dans l'état fermé) vers des moyens de réceptions comprenant un amplificateur faible bruit 336 et un filtre de sélection large bande 337. Avantageusement, le signal issu du filtre de sélection large bande 337 est amplifié 338, puis alimente deux branches distinctes : une première branche associé à la fonction altimétrique, et une deuxième branche associée à la fonction radiométrique.

La première branche comprend successivement un amplificateur 339 à gain ajustable, un filtre de sélection de la bande altimétrique 340, puis des moyens de corrélation 341 entre le signal reçu (écho issu de la réflexion par la surface terrestre du signal émis sur la bande altimétrique) et le signal émis. L'amplificateur 339 à gain ajustable permet de limiter les disparités de puissance de l'écho, ces disparités étant notamment dues aux natures différentes des surfaces de réflexion terrestres (océan liquide ou glace, par exemple). Les moyens de corrélation 341 mélangent un chirp de référence (réplique exacte du chirp ayant servi à générer le signal émis) obtenu après la transposition de fréquence 332 avec l'écho filtré issu du filtre de sélection 340. En sortie, ces moyens délivrent dans le cas d'une cible ponctuelle un signal de fréquence pure, le signal étant ensuite numérisé 316 puis retransposé dans le domaine temporel par transformée de Fourier pour finalement extraire le temps de retard de l'écho par rapport au chirp de référence. Ce retard est ensuite exploité soit à bord (par l'unité de traitement numérique 31), soit au sol (dans une station de traitement sol) pour déterminer la distance altimétrique. Selon un mode de réalisation, les moyens de corrélation 341 effectuent une démodulation complexe sur deux voies I et Q.

La deuxième branche, associée à la fonction radiométrique, comprend un filtre de réjection 342 de la bande altimétrique (dans l'exemple, la bande rejetée étant comprise entre les fréquences 35,5 GHz et 36 GHz). En effet, la fonction radiométrique ne doit pas être perturbée par les échos des signaux altimétriques. Le filtre de réjection 342 alimente un amplificateur 343, un détecteur quadratique 344 délivrant une tension proportionnelle à la puissance du bruit reçu, et un filtre passe-bas 345 réalisant une première intégration du signal afin d'obtenir une valeur moyenne de la puissance de bruit. La mesure du radiomètre permet de déterminer les corrections à appliquer aux mesures altimétriques pour compenser les imperfections dues à la traversée de l'ionosphère, ces techniques étant par ailleurs connues de l'homme de l'art.

Classiquement, une antenne commune altimètre / radiomètre selon l'art connu dispose de trois accès distincts, soit un par bande de fréquence utilisée, par exemple un premier accès pour la bande utilisée par l'altimètre, un deuxième accès pour la première bande utilisée par le radiomètre, et un troisième accès pour la deuxième bande de fréquence du radiomètre. Dans le système selon l'invention, les deux accès en bande Ka sont réunis en un seul accès 351 apte à transmettre les signaux destinés à l'altimètre et au radiomètre pour les bandes de fréquence voisines, un deuxième accès 352 étant réservé au bruit mesuré sur la deuxième bande de fréquence du radiomètre. L'une des originalités de l'architecture du système selon l'invention est que l'amplification faible bruit 336 et le filtrage 337 sont effectués sur une large bande de fréquence couvrant à la fois la bande de fréquence utilisée par l'altimètre en bande Ka, et la bande de fréquence haute du radiomètre, elle aussi en bande Ka. Ce filtrage large bande permet donc notamment d'économiser un accès supplémentaire au niveau de l'antenne 35, d'économiser l'emploi d'un amplificateur faible bruit (généralement encombrant) et de réduire la dimension du module de calibration 38 du radiomètre.

Il est à noter que la calibration du gain de réception de la deuxième voie du radiomètre (celle correspondant à la bande de fréquence haute du radiomètre, dans l'exemple autour de 37 GHz) est effectuée, cycliquement (par exemple toutes les secondes), par mesure de bruits connus délivrés par une source froide et par une source chaude. Pour cela, un premier circulateur 347 transmet à la chaîne de réception de l'unité de traitement 33 en bande Ka, soit le signal issu du premier accès 351 de l'antenne 35 (lorsqu'on est en mode réception), soit la mesure de bruit effectuée à partir d'une source de température connue. La source sélectionnée de température connue peut être la source froide 39 ou la source chaude 349, un deuxième circulateur 348 étant apte à sélectionner l'une ou l'autre alternativement.

Le module de calibration 38 du radiomètre comprend un premier circulateur 381 permettant de connecter soit une source froide 39, soit une source chaude à un deuxième circulateur 382, lequel circulateur est apte à connecter soit la sortie du premier circulateur 381, soit le deuxième accès de l'antenne 352 à l'entrée de l'unité de traitement 37 en bande K du radiomètre. Ainsi, l'entrée de l'unité de traitement 37 est alimentée : soit par les signaux issus du deuxième accès 352 de l'antenne 35, soit par une source chaude 383, soit par une source froide 39, laquelle étant, par exemple, un cornet de ciel orienté vers le vide interstellaire dont la température est parfaitement connu. La source chaude 383 peut être une charge adaptée dont la température est contrôlée avec précision.

L'unité de traitement analogique 37 en bande K du radiomètre comprend successivement le module de calibration 38, un amplificateur faible bruit 371, un filtre de bande d'intérêt 372, un détecteur quadratique 373, et un filtre passe-bas 374. Selon un autre mode de réalisation, le module de calibration 38 est séparé de l'unité de traitement analogique 37 en bande K.

Les valeurs de fréquences sont données à titre illustratif et non limitatif ; ainsi, on pourrait envisager un altimètre fonctionnant à une fréquence suffisamment proche de celle d'un radiomètre à 18 GHz, par exemple à 17 GHz (bande autorisée par l'ITU, l'Union Internationale des télécommunications), de manière à pouvoir réaliser un récepteur large bande englobant les signaux sur ces deux bandes de fréquence.

Le cycle de fonctionnement d'un système selon l'invention peut comprendre successivement :
▪ l'émission, pour la partie altimètre, d'un signal vers la surface terrestre ;
▪ la calibration du radiomètre pendant les laps de temps non utilisé pour les émissions ou les réceptions des échos;
▪ la réception et le traitement de l'écho provenant du sol et la réalisation concomitante de mesures radiométriques.

Avantageusement, l'exploitation du temps de retard de l'écho par rapport au signal émis pour estimer une distance altimétrique et la correction de cette estimation en utilisant les mesures radiométriques sont des opérations effectuées au sol.

L'architecture de la figure 3 impose une interruption de la réception lorsque l'émission du signal d'altimétrie est effectuée, le premier interrupteur d'isolation 335a étant fermé et le deuxième interrupteur d'isolation 335b étant ouvert. Les mesures radiométriques ne peuvent être réalisées qu'en dehors de ces périodes d'émission. Cette interruption cyclique de la réception sur la bande Ka entraîne une petite dégradation de la résolution radiométrique, par un facteur de dégradation qui est inversement proportionnel à la racine carrée du rapport cyclique de réception, lequel est égal au rapport de la période de réception sur la période totale du cycle réception+émission. Ainsi, pour une période de réception égale à la période d'émission, le rapport cyclique est égal à 0,5 et le facteur de dégradation est égal à la racine carrée de 2.

Afin de compenser au moins en partie cette dégradation, le système selon l'invention peut être configuré pour augmenter la bande de bruit du radiomètre. Dans l'exemple, au lieu de mesurer le bruit sur une bande de fréquence comprise entre 36,5 GHz et 37,5 GHz, le bruit est mesuré entre 36 GHz et 37,5 GHZ, comme illustré en figure 5 (bande 512). Ainsi, la sensibilité radiométrique est améliorée d'un facteur de l'ordre de 25%.

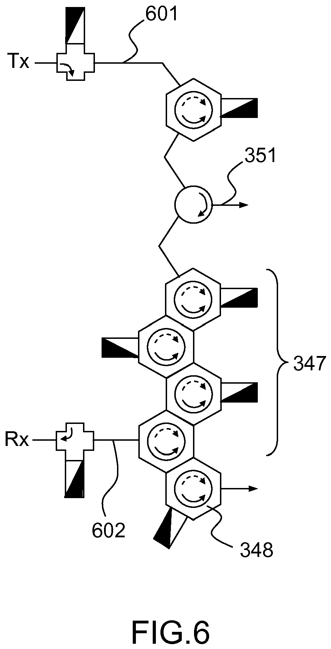

La figure 6 représente par un schéma un exemple de moyens d'isolation mis en oeuvre pour isoler la voie émission de la fonction altimétrique de la voie réception commune du système selon l'invention.

Dans l'exemple, pour obtenir une bonne isolation entre la voie émission 601 et la voie réception commune 602, quatre circulateurs sont placés en série à la place du circulateur 347 de la figure 3, chaque circulateur permettant, en position ouverte, d'atténuer un signal de 20 dB.

Contrairement à un système classique dans lequel l'altimètre et le radiomètre sont des instruments séparés, l'architecture du système selon l'invention partage un accès antenne ainsi que des éléments essentiels de la chaîne de traitement des signaux, rendant, à niveau de performances équivalent, le système beaucoup plus compact et léger que les systèmes antérieurs.

## Revendications

1. Système d'altimétrie apte à être embarqué sur un satellite, le système comprenant un altimètre émettant et recevant des signaux sur au moins une première bande de fréquence (401) et un radiomètre recevant des signaux sur au moins une deuxième bande de fréquence (412), ledit altimètre et ledit radiomètre étant connectés à une même antenne (35), le système étant **caractérisé en ce qu'**il comporte des moyens de réception (336, 337, 338) communs à l'altimètre et au radiomètre, lesdits moyens étant aptes à amplifier (336) et à filtrer (337) les signaux reçus de l'antenne sur une bande de fréquence comprenant au moins la première (401) et la deuxième bande de fréquence (412) et des moyens de séparation des signaux (340, 342) de la première bande de fréquence (401) des signaux présents sur la deuxième bande de fréquence (412), les signaux sur la première bande de fréquence étant exploités pour estimer la distance altimétrique du satellite, et les mesures radiométriques étant exploitées pour corriger ladite estimation.

2. Système d'altimétrie selon la revendication 1, dans lequel les moyens de réception comprennent un amplificateur faible bruit (336) opérant sur une bande de fréquence comprenant ladite première bande de fréquence (401) et ladite deuxième bande de fréquence (412).

3. Système d'altimétrie selon la revendication 1 ou 2, dans lequel les moyens de réception comprennent un filtre passe-bande (337) apte à sélectionner une bande de fréquence comprenant ladite première bande de fréquence (401) et ladite deuxième bande de fréquence (412).

4. Système d'altimétrie selon la revendication 3, dans lequel ledit altimètre et ledit radiomètre sont connectés à l'antenne (35) via des moyens d'interconnexion (335, 335a, 335b) comportant une fonction d'isolation des voies émission et réception, ces moyens d'interconnexion comprenant un premier circulateur (335) connecté sur un premier accès (351) à l'antenne (35), un deuxième accès dudit circulateur (335) étant connecté sur un interrupteur (335a) relié à la voie émission de l'altimètre (331, 332, 334), un troisième accès dudit circulateur (335) étant connecté sur un interrupteur (335b) relié aux moyens de réception (335, 347, 336, 337, 338) communs à l'altimètre et au radiomètre.

5. Système d'altimétrie selon la revendication 4, dans lequel les moyens de réception communs (336, 337, 338) sont connectés à un premier circulateur (347) relié via un premier accès aux moyens d'interconnexion (335), et relié via un deuxième accès à des moyens de calibration du radiomètre, lesdits moyens de calibration comprenant une source chaude (349) et une source froide (39) configurées pour être connectées alternativement au premier circulateur (347).

6. Système d'altimétrie selon l'une quelconque des revendications précédentes, dans lequel les moyens de séparation des signaux comprennent un filtre de réjection (342) de la première bande de fréquence (401), ledit filtre étant placé en aval des moyens de réception communs (336, 337, 338).

7. Système d'altimétrie selon l'une quelconque des revendications précédentes, dans lequel ladite première bande de fréquence (401) et ladite deuxième bande de fréquence (412) sont comprises dans la bande Ka.

8. Système d'altimétrie selon l'une quelconque des revendications précédentes, dans lequel la deuxième bande de fréquence (412) est choisie pour que sa borne minimale coïncide avec la borne maximale de la première bande de fréquence (401), ou pour que sa borne maximale coïncide avec la borne minimale de la première bande de fréquence (401).

9. Charge utile altimétrique pour satellite comprenant un dispositif de positionnement du satellite (203) par rapport à un référentiel terrestre et un système d'altimétrie selon l'une quelconque des revendications 1 à 8.

## Patentansprüche

1. Höhenmessungssystem, welches in der Lage ist, an Bord eines Satelliten installiert zu werden, wobei das System einen Höhenmesser beinhaltet, welcher Signale auf mindestens einem ersten Frequenzband (401) sendet und empfängt und ein Radiometer, welches Signale auf mindestens einem zweiten Frequenzband (412) empfängt, wobei der Höhenmesser und das Radiometer an einer gleichen Antenne (35) angeschlossen sind, wobei das System **dadurch gekennzeichnet ist, dass** es gemeinsame Empfangsmittel (336, 337, 338) des Höhenmessers und des Radiometers beinhaltet, wobei die Mittel in der Lage sind, die von der Antenne auf einem Frequenzband, welches mindestens das erste (401) und das zweite Frequenzband (412) enthält, empfangenen Signale zu verstärken (336) und zu filtern (337) und Mittel zum Trennen der Signale (340, 342) des ersten Frequenzbandes (401) von denjenigen Signalen, die auf dem zweiten Frequenzband (412) vorhanden sind, wobei die Signale auf dem ersten Frequenzband ausgewertet werden, um den altimetrischen Abstand des Satelliten zu schätzen, und die radiometrischen Messungen ausgewertet werden, um diese Schätzung zu korrigieren.

2. Höhenmessungssystem nach Anspruch 1, bei welchem die Empfangsmittel einen rauscharmen Verstärker (336) beinhalten, welcher auf einem Frequenzband arbeitet, welches das erste Frequenzband (401) und das zweite Frequenzband (412) beinhaltet.

3. Höhenmessungssystem nach Anspruch 1 oder 2, bei welchem die Empfangsmittel einen Passbandfilter (337) beinhalten, welcher in der Lage ist, ein Frequenzband auszuwählen, welches das erste Frequenzband (401) und das zweite Frequenzband (412) beinhaltet.

4. Höhenmessungssystem nach Anspruch 3, bei welchem das Höhenmessgerät und das Radiometer an die Antenne (35) über Vernetzungsmittel (335, 335a, 335b) angeschlossen sind, welche eine Isolationsfunktion der Sende- und der Empfangskanäle beinhalten, wobei diese Vernetzungsmittel einen ersten Zirkulator (335) beinhalten, welcher an einen ersten Zugang (351) zur Antenne (35) angeschlossen ist, wobei ein zweiter Zugang des Zirkulators (335) an einen Schalter (335a) angeschlossen ist, welcher mit dem Sendekanal des Höhenmessers (331, 332, 334) verbunden ist, wobei ein dritter Zugang des Zirkulators (335) an einen Schalter (335b) angeschlossen ist, welcher mit den gemeinsamen Empfangsmitteln (335, 347, 336, 337, 338) des Höhenmessers und des Radiometers verbunden ist.

5. Höhenmessungssystem nach Anspruch 4, bei welchem die gemeinsamen Empfangsmittel (336, 337, 338) an einen ersten Zirkulator (347) angeschlossen sind, welcher über einen ersten Zugang mit den Vernetzungsmitteln (335) verbunden ist, und über einen zweiten Zugang mit Kalibriermitteln des Radiometers verbunden ist, wobei die Kalibriermittel eine Wärmequelle (349) und eine Kältequelle (39) beinhalten, welche konfiguriert sind, um abwechselnd am ersten Zirkulator (347) angeschlossen zu werden.

6. Höhenmessungssystem nach einem der vorhergehenden Ansprüche, bei welchem die Mittel zum Trennen der Signale einen Sperrfilter (342) für das erste Frequenzband (401) beinhalten, wobei der Filter im nachgelagerten Bereich der gemeinsamen Empfangsmittel (336, 337, 338) platziert ist.

7. Höhenmessungssystem nach einem der vorhergehenden Ansprüche, bei welchem das erste Frequenzband (401) und das zweite Frequenzband (412) in dem Band Ka beinhaltet sind.

8. Höhenmessungssystem nach einem der vorhergehenden Ansprüche, bei welchem das zweite Frequenzband (412) so gewählt wird, dass seine Tiefstgrenze mit der Höchstgrenze des ersten Frequenzbandes (401) zusammenfällt, oder dass seine Höchstgrenze mit der Tiefstgrenze des ersten Frequenzbandes (401) zusammenfällt.

9. Höhenmess-Nutzlast für Satelliten, welche eine Positionierungsvorrichtung des Satelliten (203) in Bezug auf ein terrestrisches Referenzsystem und ein Höhenmessungssystem nach einem der Ansprüche 1 bis 8 beinhaltet.

## Claims

1. Altimetry system capable of being installed on board a satellite, the system comprising an altimeter transmitting and receiving signals on at least one first frequency band (401) and a radiometer receiving signals on at least one second frequency band (412), the said altimeter and the said radiometer being connected to one and the same antenna (35), the system being **characterized in that** it comprises reception means (336, 337, 338) common to the altimeter and to the radiometer, the said means being capable of amplifying (336) and of filtering (337) the signals received from the antenna on a frequency band comprising at least the first frequency band (401) and the second frequency band (412) and means for separating the signals (340, 342) of the first frequency band (401) from the signals that are present on the second frequency band (412), the signals on the first frequency band being exploited in order to estimate the altimetric distance of the satellite, and the radiometric measurements being exploited in order to correct the said estimate.

2. Altimetry system according to claim 1, in which the reception means comprise a low noise amplifier (336) operating on a frequency band comprising the said first frequency band (401) and the said second frequency band (412).

3. Altimetry system according to claim 1 or 2, in which the reception means comprise a band-pass filter (337) capable of selecting a frequency band comprising the said first frequency band (401) and the said second frequency band (412).

4. Altimetry system according to claim 3, in which the said altimeter and the said radiometer are connected to the antenna (35) via interconnection means (335, 335a, 335b) comprising a function for isolating the transmission and reception channels, these interconnection means comprising a first circulator (335) connected to the antenna (35) on a first port (351), a second port of the said circulator (335) being connected to a switch (335a) connected to the transmission channel of the altimeter (331, 332, 334), a third port of the said circulator (335) being connected to a switch (335b) connected to the reception means (335, 347, 336, 337, 338) common to the altimeter and to the radiometer.

5. Altimetry system according to claim 4, in which the common reception means (336, 337, 338) are connected to a first circulator (347) connected via a first port to the interconnection means (335), and connected via a second port to calibration means for calibrating the radiometer, the said calibration means comprising a hot source (349) and a cold source (39) configured to be connected alternately to the first circulator (347).

6. Altimetry system according to any one of the preceding claims, in which the signal-separation means comprise a rejection filter (342) for rejecting the first frequency band (401), the said filter being placed downstream of the common reception means (336, 337, 338).

7. Altimetry system according to any one of the preceding claims, in which the said first frequency band (401) and the said second frequency band (412) are included in the Ka band.

8. Altimetry system according to any one of the preceding claims, in which the second frequency band (412) is chosen so that its minimum boundary coincides with the maximum boundary of the first frequency band (401), or so that its maximum boundary coincides with the minimum boundary of the first frequency band (401).

9. Altimetric payload for a satellite comprising a device for positioning the satellite (203) relative to an Earth reference point and an altimetry system according to any one of claims 1 to 8.
